# EUROPEAN PATENT APPLICATION

(11) **EP 4 717 559 A1**
(43) Date of publication of application: **01.04.2026**
(21) Application number: 24739998.3
(22) Date of filing: 22.05.2024
(51) Int. Cl.: B62D 5/00, B62D 5/04, B62D 15/02

(54) **STEER-BY-WIRE APPARATUS FOR VEHICLE**

(30) Priority: 23.05.2023 KR 20230066598
(71) Applicant: Autonomous A2Z Co., Ltd., Gyeongsan-si, Gyeongsangbuk-do 38428 (KR)
(72) Inventor: LEE, Young Song, Ansan-si, Gyeonggi-do 15463 (KR); HYUN, Seung Hwa, Daegu 43019 (KR); OH, Young Chul, Seongnam-si, Gyeonggi-do 13540 (KR)
(74) Representative: Klunker IP Patentanwälte PartG mbB
(86) International application number: PCT/KR2024/006929
(87) International publication number: WO 2024/242464

(57) **Abstract**

A steer-by-wire device of a vehicle is provided. The steer-by-wire device includes: a rack shaft, where a rack gear is mounted, configured to adjust steering angles of vehicle wheels; a pinion gear configured to move the rack gear linearly according to a rotational motion of the pinion gear engaged with the rack gear; a differential gear module including (i) a 1-st and a 2-nd sun gears installed opposite each other, (ii) a planet gear, engaged with the 1-st and 2-nd sun gears, wherein the planet gear revolves in response to a rotational motion of the 1-st and/or the 2-nd sun gears, and (iii) a case configured to rotate according to a rotational motion of the planet gear; a 1-st and a 2-nd actuators for rotating the 1-st and the 2-nd sun gears; and a steering sensor configured to detect a momentum of the rack gear and/or the pinion gear.

## Description

This present application claims the benefit of the earlier filing date of Korean non-provisional patent application No. 10-2023-0066598, filed on May 23, 2023, the entire contents of which being incorporated herein by reference.

The present disclosure relates to a steer-by-wire device of a vehicle and more particularly relates to the steer-by-wire device of the vehicle which provides a redundancy structure to be used for coping with a mechanical failure as well as an electrical failure of an actuator capable of driving a wheel steering mechanism of the steer-by wire device.

A steer-by-wire system is a steering system for transmitting operations on a steering wheel of a driver to a wheel steering mechanism of a vehicle using an electric signal in the absence of a mechanical connection between the steering wheel and the wheel steering mechanism, to thereby control the wheel steering mechanism.

In the steer-by-wire system, since the wheel steering mechanism is controlled by the electric signal in the absence of the mechanical connection between the steering wheel and the wheel steering mechanism, it has advantages as follows: a manipulation on the steering wheel can be directly reflected on the wheel steering mechanism; unnecessary vibrations can be blocked; a steering gear ratio can be adjusted; and unintended steering input from the driver can be blocked during an autonomous driving process.

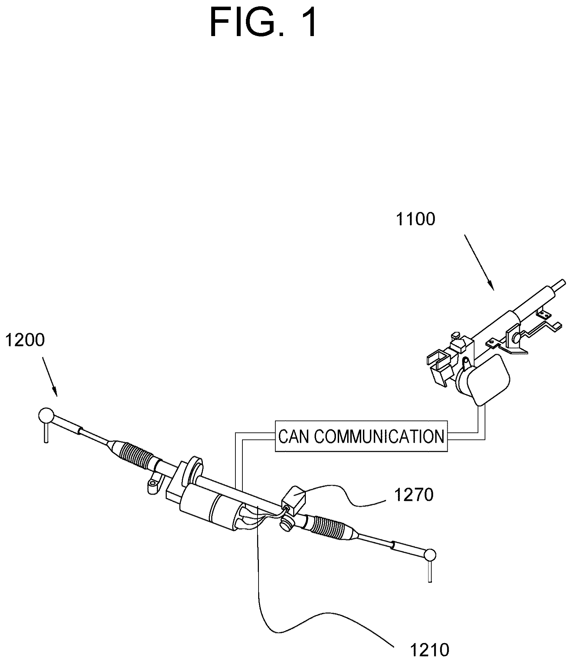

By referring to Fig. 1, a configuration of a steer-by-wire device 1000 according to a conventional art is explained below.

According to Fig. 1, the steer-by-wire device 1000 may include a steering input unit 1100 for receiving steering input information from the driver. The steering input unit 1100 may include a steering wheel sensor (not shown) configured to detect a momentum of the steering wheel.

In addition, the steer-by-wire device 1000 may include a wheel steering unit 1200 configured to control vehicle wheels. Herein, the wheel steering unit 1200 may include: a rack shaft 1210 configured to adjust steering angles of the vehicle wheels according to a position of the rack shaft 1210; and a steering sensor 1270 configured to detect the position of the rack shaft 1210. Further, the wheel steering unit 1200 may include at least one controller (not shown) configured to control the wheel steering unit 1200 by referring to the steering input information from the steering input unit 1100.

Herein, the steering input information from the steering input unit 1100 may be transmitted to the controller of the wheel steering unit 1200 by using CAN(Controller Area Network) communication.

However, in case an event of an electrical failure is happened, there is a major safety problem of being unable to perform steering control at all even if the driver operates the steering wheel since there is no mechanical connection between the steering wheel and the wheel steering mechanism in the steer-by-wire system.

To prevent the aforementioned problem, in a conventional technology, even if a breakdown occurs in a 1-st electronic controller, the steering control can be maintained by using a 2-nd electronic controller through a duplexing technology.

However, in case of the steer-by-wire system mentioned above, if a mechanical failure occurs in an actuator itself of the wheel steering mechanism, there is a problem of being unable to accurately perform the steering control, which may lead to a major accident.

Therefore, it is necessary to develop an advanced steer-by-wire system capable of performing the steering control by using a redundancy structure even if the mechanical failure occurs in the actuator itself of the wheel steering mechanism.

It is an object of the present disclosure to solve all the aforementioned problems.

It is another object of the present disclosure to provide a steer-by-wire device capable of performing steering control even if a breakdown occurs in an actuator of a wheel steering mechanism of a vehicle.

It is still another object of the present disclosure to provide a redundancy structure of the steer-by-wire device to be used for coping with an event of a mechanical failure as well as an electrical failure of the actuator.

It is still yet another object of the present disclosure to provide the redundancy structure of the steer-by-wire device configured to allow a planet gear to rotate about an axis of revolution, and thus the planet gear may allow an inoperative sun gear to be rotated.

It is still yet another object of the present disclosure to realize the redundancy structure with a minimal spatial constraint.

In accordance with one aspect of the present disclosure, there is provided a steer-by-wire device of a vehicle, including: a rack shaft, where a rack gear is mounted, configured to adjust steering angles of vehicle wheels by a linear motion of the rack gear; a pinion gear configured to move the rack gear linearly according to a rotational motion of the pinion gear engaged with the rack gear; a differential gear module including (i) a 1-st sun gear and a 2-nd sun gear installed opposite each other, (ii) at least one planet gear, engaged with the 1-st sun gear and the 2-nd sun gear, wherein the planet gear revolves around an axis of revolution connecting a center point of the 1-st sun gear and a center point of the 2-nd sun gear, in response to a rotational motion of at least one of the 1-st sun gear and the 2-nd sun gear, and (iii) a case configured to rotate about the axis of revolution according to a rotational motion of the planet gear, wherein the case is combined with the pinion gear; a 1-st actuator and a 2-nd actuator, wherein the 1-st actuator is configured to rotate the 1-st sun gear and the 2-nd actuator is configured to rotate the 2-nd sun gear; at least one controller configured to control the 1-st actuator and the 2-nd actuator in response to steering input information; and a steering sensor configured to detect at least one momentum of at least one of the rack gear and the pinion gear.

As one example, (i) the controller determines a rack loading condition at a time of a steering of the vehicle by referring to information on a driving status of the vehicle, (ii) in response to determining that the rack loading condition is larger than a predetermined 1-st loading value, the controller controls the 1-st actuator and the 2-nd actuator, thereby allowing the steering angles of the vehicle wheels to be adjusted, and (iii) in response to determining that the rack loading condition is smaller than or equal to a predetermined 2-nd loading value which is lower than the predetermined 1-st loading value, the controller controls a specific actuator selected among the 1-st actuator and the 2-nd actuator, thereby allowing the steering angles of the vehicle wheels to be adjusted.

As one example, on condition that the steering angles of the vehicle wheels have been adjusted by controlling the specific actuator in response to determining that the rack loading condition is smaller than or equal to the predetermined 2-nd loading value, in case the momentum of at least one of the rack gear and the pinion gear, detected from the steering sensor, is less than a target momentum by an allowable threshold or more, wherein the target momentum corresponds to the steering input information, the controller determines that the specific actuator is broken and thus controls a remaining actuator, which is not the specific actuator, selected among the 1-st actuator and the 2-nd actuator, thereby allowing the steering angles of the vehicle wheels to be adjusted.

As one example, in case a cardinal number of the controller is plural, on condition that a specific controller selected among all controllers has controlled the 1-st actuator and the 2-nd actuator, in response to detecting that a specific another controller selected among one or more remaining controllers fails to receive information on an operating status from the specific controller for a certain period of time, wherein the remaining controllers are determined by excluding the specific controller from all the controllers, the specific another controller determines that the specific controller is broken and thus controls the 1-st actuator and the 2-nd actuator, thereby allowing the steering angles of the vehicle wheels to be adjusted.

As one example, the 1-st actuator includes a 1-st locking unit configured to allow or disallow a rotation of the 1-st sun gear, and the 2-nd actuator includes a 2-nd locking unit configured to allow or disallow a rotation of the 2-nd sun gear.As one example, the 1-st actuator includes a 1-st motor configured to generate power, a 1-st reducer configured to convert the power generated from the 1-st motor into a 1-st power value, and a 1-st sun gear shaft where the 1-st reducer and the 1-st sun gear are respectively mounted, and the 2-nd actuator includes a 2-nd motor configured to generate power, a 2-nd reducer configured to convert the power generated from the 2-nd motor into a 2-nd power value, and a 2-nd sun gear shaft where the 2-nd reducer and the 2-nd sun gear are respectively mounted.

As one example, the 1-st motor includes a (1_1)-st winding wire to a (1_n)-th winding wire which are configured to generate the power of the 1-st motor, wherein n is an integer greater than or equal to two, the 2-nd motor includes a (2_1)-st winding wire to a (2_n)-th winding wire which are configured to generate the power of the 2-nd motor, the controller includes a 1-st controller to an n-th controller, and wherein, in case a 1-st winding wire pair is comprised of the (1_1)-st winding wire and the (2_1)-st winding wire and in case an n-th winding wire pair is comprised of the (1_n)-th winding wire and the (2_n)-th winding wire, each of the 1-st winding wire pair to the n-th winding wire pair is connected to and controlled by each of the 1-st controller to the n-th controller.

As one example, the 1-st motor includes a 1-st winding wire configured to generate the power of the 1-st motor, the 2-nd motor includes a 2-nd winding wire configured to generate the power of the 2-nd motor, the controller includes a specific controller and a specific another controller, and on condition that each of the 1-st winding wire and the 2-nd winding wire has been connected to the specific controller and the specific another controller, wherein, in case the specific controller controls the 1-st winding wire and the 2-nd winding wire, in response to detecting that the specific another controller fails to receive information on an operating status from the specific controller for a certain period of time, the specific another controller capable of controlling the 1-st winding wire and the 2-nd winding wire determines that the specific controller is broken and thus instructs the 1-st winding wire and the 2-nd winding wire to respectively generate the power of the 1-st motor and the power of the 2-nd motor.

The above and other objects and features of the present disclosure will become apparent from the following description of preferred embodiments given in conjunction with the accompanying drawings.

The following drawings to be used to explain example embodiments of the present disclosure are only part of example embodiments of the present disclosure and other drawings can be obtained based on the drawings by those skilled in the art of the present disclosure without inventive work.
Fig. 1 is a drawing schematically illustrating a steer-by-wire device according to a conventional art.
Fig. 2 is a drawing schematically illustrating a part of a steer-by-wire device in accordance with the present disclosure.
Fig. 3 is a drawing schematically illustrating a cross-sectional view acquired from the part of the steer-by-wire device in accordance with one example embodiment of the present disclosure.
Fig. 4 is a drawing schematically illustrating a configuration of the steer-by-wire device where a 1-st locking unit and a 2-nd locking unit are mounted in accordance with one example embodiment of the present disclosure.
Fig. 5 is a flow chart schematically illustrating processes of at least one controller which controls a 1-st actuator and a 2-nd actuator according to a rack loading condition in the steer-by-wire device in accordance with one example embodiment of the present disclosure.
Fig. 6 is a flow chart schematically illustrating processes of a specific another controller which controls the 1-st actuator and the 2-nd actuator in response to detecting that a specific controller is broken in the steer-by-wire device in accordance with one example embodiment of the present disclosure.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the spirit and scope of the present invention.

In addition, it is to be understood that the position or arrangement of individual elements within each disclosed embodiment may be modified without departing from the spirit and scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

To allow those skilled in the art to carry out the present invention easily, the example embodiments of the present invention by referring to attached diagrams will be explained in detail as shown below.

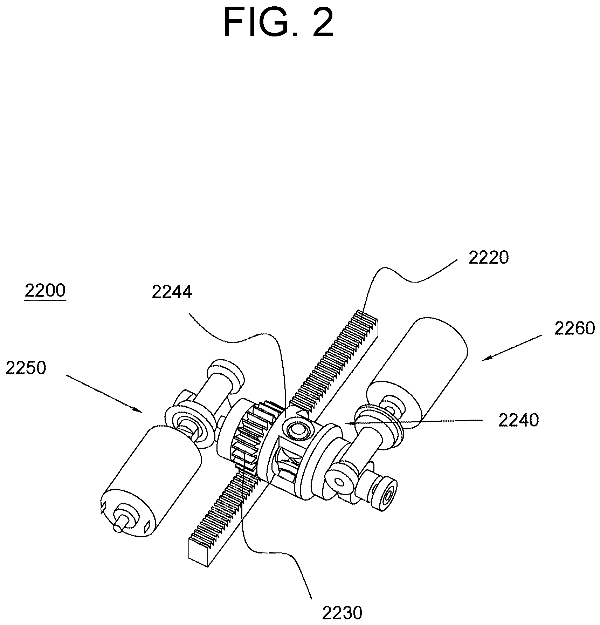

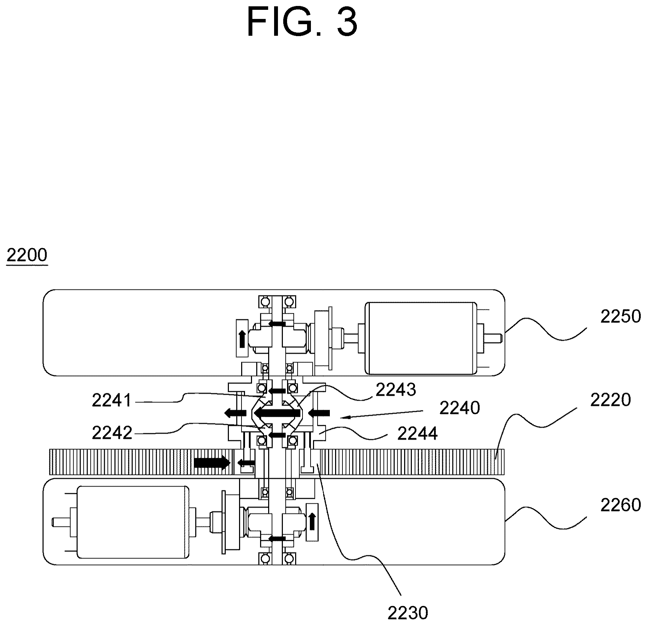

First, by referring to Fig. 2 and Fig. 3, a steer-by-wire device of a vehicle in accordance with the present disclosure is explained below.

Fig. 2 is a drawing schematically illustrating a part of the steer-by-wire device in accordance with one example embodiment of the present disclosure, and Fig. 3 is a drawing schematically illustrating a cross-sectional view acquired from the part of the steer-by-wire device in accordance with one example embodiment of the present disclosure.

By referring to Fig. 2 and Fig. 3, the steer-by-wire device may include a rack shaft, where a rack gear 2220 is mounted, configured to adjust steering angles of vehicle wheels by a linear motion of the rack gear 2220. Herein, the rack shaft may also be configured to adjust the steering angles by a linear motion thereof.

In addition, the rack gear 2220 may be engaged with a pinion gear 2230 configured to move the rack gear 2220 linearly according to a rotational motion of the pinion gear 2230.

Herein, the pinion gear 2230 may be a cylindrical shape and may be engaged with the rack gear 2220 at a point on a circumference of the pinion gear 2230. In this case, the pinion gear 2230 is possible to rotate in a clockwise direction or in a counterclockwise direction without changing its position, and a rotational direction of the rack gear 2220 may be opposite to a rotational direction of the pinion gear 2230.

Further, the steer-by-wire device may include a differential gear module 2240.

In detail, the differential gear module 2240 may include a 1-st sun gear 2241 and a 2-nd sun gear 2242 installed opposite each other.

In addition, the differential gear module 2240 may include a planet gear 2243 engaged with both the 1-st sun gear 2241 and the 2-nd sun gear 2242. Herein, the planet gear 2243 is positioned between the 1-st sun gear 2241 and the 2-nd sun gear 2242.

In this case, the planet gear 2243 can revolve around an axis of revolution connecting a center point of the 1-st sun gear 2241 and a center point of the 2-nd sun gear 2242, in response to a rotational motion of at least one of the 1-st sun gear 2241 and the 2-nd sun gear 2242. Further, the planet gear 2243 may rotate about the axis of revolution by a difference in driving force between the 1-st sun gear 2241 and the 2-nd sun gear 2242. In case one of the 1-st sun gear 2241 and the 2-nd sun gear 2242 is an operative sun gear and the other one is an inoperative sun gear, the operative sun gear may allow the planet gear 2243 to rotate about the axis of revolution, and thus the planet gear 2243 may allow the inoperative sun gear to be rotated. Further, a driving force from the operative sun gear may lead to a revolution of the planet gear 2243 around the axis of revolution. In addition, the number of the planet gear 2243 is not limited. For example, a plurality of planet gears 2243 may be engaged with the 1-st sun gear 2241 and the 2-nd sun gear 2242 with a plurality of coupling conditions.

In addition, the differential gear module 2240 may include a case 2244 configured to rotate about the axis of revolution of the planet gear 2243. Herein, the case 2244 is combined with the pinion gear 2230.

In this case, the case 2244 may be a cylindrical shape surrounding the 1-st sun gear 2241, the 2-nd sun gear 2242, and the planet gear 2243, but it is not limited thereto.

Meanwhile, although the example of the differential gear module 2240 is described above, the present disclosure is not limited thereto. For example, the differential gear module 2240 may be configured in various ways to allow the planet gear 2243 to revolve around the axis of revolution by the driving force from the sun gears.

Further, the steer-by-wire device may include a 1-st actuator 2250 configured to rotate the 1-st sun gear 2241 and a 2-nd actuator 2260 configured to rotate the 2-nd sun gear 2242.

Herein, each the 1-st actuator 2250 and the 2-nd actuator 2260 is configured to receive power from each of different routes, and thus even if the power to be supplied to one of the 1-st actuator 2250 and the 2-nd actuator 2260 is stopped, the power can be supplied to the other one of the 1-st actuator 2250 and the 2-nd actuator 2260.

Meanwhile, the 1-st actuator 2250 and the 2-nd actuator 2260 may be installed in a parallel direction with a linear motion direction of the rack gear 2220 in order to minimize a space required for installing the 1-st actuator 2250 and the 2-nd actuator 2260. Further, each rotational power of the 1-st actuator 2250 and the 2-nd actuator 2260 may be converted and transmitted to each axial direction of the 1-st sun gear 2241 and the 2-nd sun gear 2242 by using each bevel gear. Accordingly, the present disclosure does not provide separate configurations of transmitting the driving force of the 1-st actuator 2250 and the driving force of the 2-nd actuator 2260 to be used for driving the rack gear 2220 and the pinion gear 2230 capable of controlling the steering, but provide a configuration of allowing one differential gear module 224 to drive the rack gear 2220 and the pinion gear 2230 by the 1-st actuator 2250 and the 2-nd actuator 2260. Accordingly, the present disclosure can realize a redundancy structure to be used for coping with a breakdown of an actuator without occurring any spatial problem. In this case, the each bevel gear may serve as each reducer for adjusting both the rotational power transmitted from the 1-st actuator 2250 to the 1-st sun gear 2241 and the rotational power transmitted from the 2-nd actuator 2260 to the 2-nd sun gear 2242. However, in the present disclosure, the reducer may not be limited to the bevel gear. For example, various shapes of the reducer may be used depending on installed directions of the 1-st actuator 2250 and the 2-nd actuator 2260.

Further, a 1-st sun gear shaft may be combined with the 1-st sun gear 2241 by using a hollow hole formed through the pinion gear 2230. Herein, the 1-st sun gear shaft can transmit the driving force from the 1-st actuator 2250 to the 1-st sun gear 2241.

Further, the steer-by-wire device may include at least one controller configured to control the 1-st actuator 2250 and the 2-nd actuator 2260 in response to steering input information. Herein, the steering input information may be manually inputted by the driver or automatically inputted according to information on a driving status of the vehicle. Herein, the number of the controller may be varied and thus if a plurality of controllers are provided, actuators controlled by each of the controllers may also be varied.

In addition, the steer-by-wire device may include a steering sensor 1270 configured to detect at least one momentum of at least one of the rack gear 2220 and the pinion gear 2230. In this case, the steering sensor 1270 may detect a linear momentum of the rack gear 2220 and a rotational momentum of the pinion gear 2230.

In the steer-by-wire device configured as described above, the 1-st sun gear 2241 and the 2-nd sun gear 2242 can rotate respectively by the driving force from the 1-st actuator 2250 and the driving force from the 2-nd actuator 2260, and accordingly the planet gear 2243 can rotate. In addition, the case 2244 can rotate about the axis of revolution according to a rotational motion of the planet gear 2243, and the rack gear 2220 can move linearly according to a rotational motion of the pinion gear 2230, thereby allowing the steering angles to be controlled.

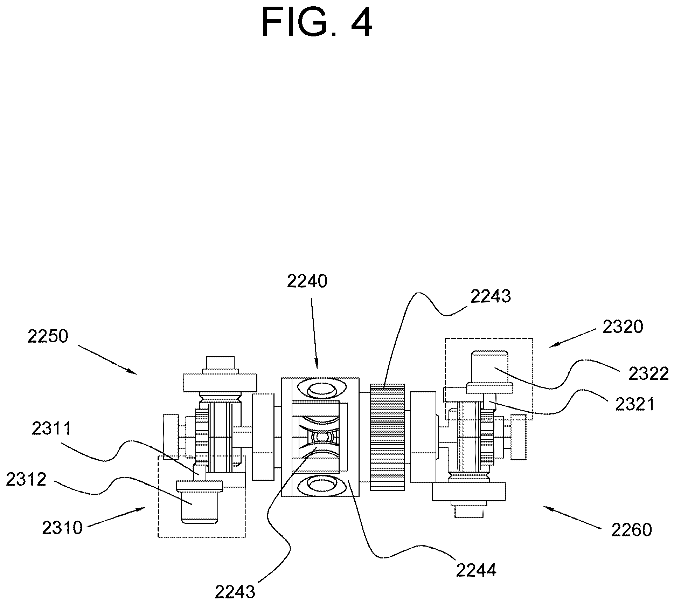

Next, by referring to Fig. 4, a configuration of a locking unit mounted in the steer-by-wire device is explained below.

In accordance with one example embodiment of the present disclosure as described above, the planet gear 2243 may allow the inoperative sun gear to be rotated. But in case a rotation speed of the sun gear is fast, for example, in case a reducer with a low reduction gear ratio is used, the driving force from the operative sun gear may be transmitted to an inoperative actuator through the inoperative sun gear. To prevent this problem, the 1-st actuator 2250 may be implemented to include a 1-st locking unit 2310 configured to allow or disallow a rotation of the 1-st sun gear 2241, and the 2-nd actuator 2260 may be implemented to include a 2-nd locking unit 2320 configured to allow or disallow a rotation of the 2-nd sun gear 2242. In this case, the 1-st locking unit 2310 and the 2-nd locking unit 2320 may be mounted in any position on each driving force transmission path between each sun gear and its corresponding actuator, and may be implemented as various structures capable of disallowing, i.e., blocking, a rotational motion of each sun gear located on each corresponding driving force transmission path. For example, the 1-st locking unit 2310 and the 2-nd locking unit 2320 may be configured as various forms, such as a configuration of providing frictional force directly to the driving force transmission shaft to block a rotation of the driving force transmission shaft or another configuration of preventing the rotation of a gear unit by being engaged with any gear unit which is located on the driving force transmission path.

Fig. 4 is a drawing schematically illustrating a configuration of the steer-by-wire device where the 1-st locking unit 2310 and the 2-nd locking unit 2320 are mounted in accordance with one example embodiment of the present disclosure.

By referring Fig. 4, in the present disclosure, the 1-st actuator 2250 may include the 1-st locking unit 2310 and the 2-nd actuator 2260 may include the 2-nd locking unit 2320.

In this case, each of the 1-st locking unit 2310 and the 2-nd locking unit 2320 may be comprised of each solenoid valve, and said each solenoid valve may be installed in each reducer of the 1-st actuator 2250 and the 2-nd actuator 2260. However, the present disclosure is not limited thereto. For example, various units capable of blocking rotational forces of the sun gears located at the reducers or other points on the driving force transmission path may be used as the locking units.

In addition, on condition that the solenoid valve has maintained a locked state of blocking a transmission of driving force at the reducer, i.e., on condition that the solenoid valve has prevented a reducer gear from being rotated, the solenoid valve becomes an unlocked state in response to an actuator driving signal. That is, the unlocked state represents that the locked state of blocking the transmission of the driving force at the reducer is released.

As a result, if either the 1-st actuator or the 2-nd actuator is broken, the inoperative actuator cannot be provided with its corresponding actuator driving signal by maintaining the locked state of the solenoid valve, thereby preventing the driving force of the operative actuator from being dispersed to the inoperative actuator. Further, if either the 1-st actuator or the 2-nd actuator is turned off selectively, its corresponding reducer may block a transmission of the driving force according to the locked state of the solenoid valve.

Herein, when the 1-st locking unit 2310 is locked, a 1-st locking pin 2311 may protrude from a 1-st locking body 2312, and when the 1-st locking unit 2310 is unlocked, the 1-st locking pin 2311 may be inserted into the 1-st locking body 2312. In this case, the 1-st locking pin 2311 with the locked state is engaged with the reducer(e.g., the bevel gear), thereby preventing the rotation of the reducer. Similarly, when the 2-nd locking unit 2320 is locked, a 2-nd locking pin 2321 may protrude from a 2-nd locking body 2322, and when the 2-nd locking unit 2320 is unlocked, the 2-nd locking pin 2321 may be inserted into the 2-nd locking body 2322. In this case, the 2-nd locking pin 2321 with the locked state is engaged with another reducer(e.g., another bevel gear), thereby preventing the rotation of the another reducer.

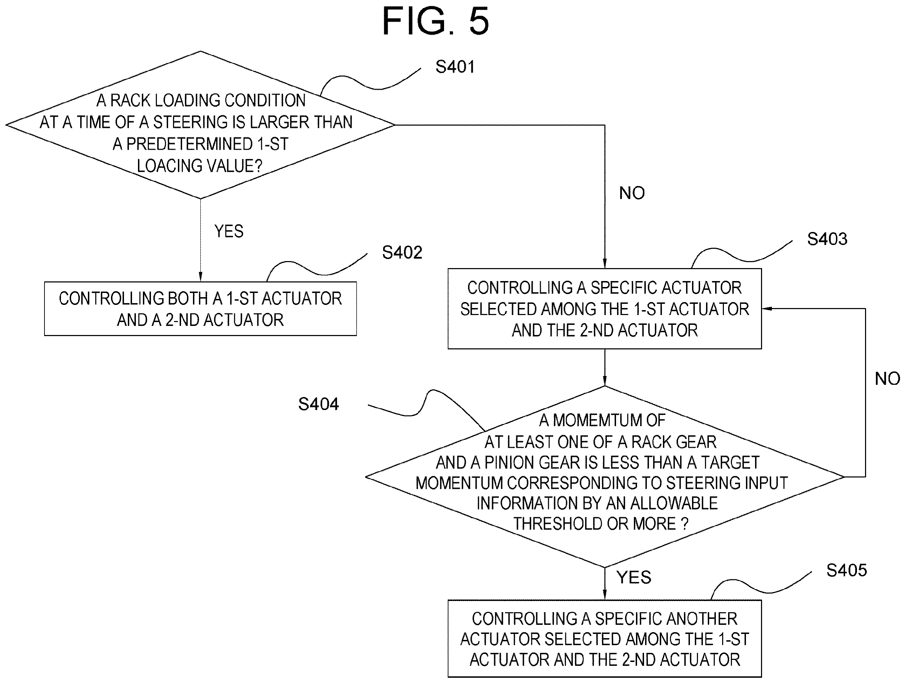

Next, by referring to Fig. 5, the processes of at least one controller which controls the 1-st actuator 2250 and the 2-nd actuator 2260 according to a rack loading condition is explained below.

Fig. 5 is a flow chart schematically illustrating processes of the controller which controls the 1-st actuator 2250 and the 2-nd actuator 2260 according to the rack loading condition in the steer-by-wire in accordance with one example embodiment of the present disclosure.

By referring to Fig. 5, in the steer-by-wire device, the controller may determine the rack loading condition at a time of the steering of the vehicle by referring to information on a driving status of the vehicle at a step of S401. That is, since a required loading value for the steering is high in case the vehicle is at a standstill, the controller may determine that the rack loading condition is larger than a predetermined 1-st loading value, and since the required loading value for the steering is low in case the vehicle is moving, the controller may determine that the rack loading condition is smaller than or equal to a predetermined 2-nd loading value which is lower than the predetermined 1-st loading value.

The controller may allow both the 1-st actuator 2250 and the 2-nd actuator 2260 to be operated in response to determining that the rack loading condition is larger than the predetermined 1-st loading value when the vehicle is at the standstill at a step of S402. In this case, the power may be supplied to both the 1-st sun gear 2241 and the 2-nd sun gear 2242, thereby allowing the pinion gear 2230 to be rotated, and the steering angles of the vehicle wheels can be adjusted accordingly.

On the other hand, the controller may control a specific actuator selected among the 1-st actuator 2250 and the 2-nd actuator 2260 in response to determining that the rack loading condition is smaller than or equal to the predetermined 2-nd loading value when the vehicle is moving, thereby allowing the steering angles of the vehicle wheels to be adjusted at a step of S403. That is, the power may be supplied to a specific sun gear selected among the 1-st sun gear 2241 and the 2-nd sun gear 2242, thereby allowing the pinion gear 2230 to be rotated.

In this case, in case the breakdown occurs in the specific actuator, the pinion gear 2230 does not rotate at all and thus the steering of the vehicle is not possible, which may lead to an accident. Accordingly, in case the momentum of at least one of the rack gear 2220 and the pinion gear 2230, detected from the steering sensor 1270, is less than a target momentum by an allowable threshold or more, the controller may determine that the specific actuator is broken at a step of S404. Herein, the target momentum corresponds to the steering input information. That is, in case steering angle values of the vehicle are significantly less than their corresponding values included in the steering input information from the driver, the controller may control a remaining actuator, which is not the specific actuator, selected among the 1-st actuator and the 2-nd actuator at a step of S405. For example, in case the steering angle values are not appropriate although the controller tried to control the 1-st actuator 2250, the controller can control the 2-nd actuator 2260. Accordingly, the steering angles of the vehicle wheels can be appropriately adjusted.

Herein, in case the power is supplied by controlling the 1-st actuator 2250, the 1-st locking unit 2310 becomes the unlocked state and the 2-nd locking unit 2320 becomes the locked state, thereby preventing the driving force of the 1-st actuator 2250 from being transmitted to the 2-nd actuator 2260.

In the example of Fig. 4, the 1-st locking pin 2311 of the 1-st locking unit 2310 and the 2-nd locking pin 2321 of the 2-nd locking unit 2320 are respective located at a bevel gear of the 1-st actuator 2250 and a bevel gear of the 2-nd actuator 2260. According to the example of Fig. 4, in case the power is supplied to the 2-nd actuator 2260 and the power is not supplied to the 1-st actuator 2250, the 1-st locking unit 2310 located at the 1-st actuator 2250 maintains the locked state so that the 1-st locking pin 2311 can prevent the bevel gear from being rotated. Thus, even if the power is supplied to the 2-nd actuator 2260, a motor and a bevel gear which are included in the 1-st actuator 2250, and the 1-st sun gear 2241 do not rotate, which results in reducing power loss. In the example of Fig. 4, each of the 1-st locking unit 2310 and the 2-nd locking unit 2320 is engaged its corresponding bevel gear, but it is not limited thereto. For example, the 1-st locking unit 2310 may be mounted at an arbitrary position of the 1-st actuator 2250 and the 2-nd locking unit 2320 may be at another arbitrary position of the 2-nd actuator 2260. For example, the 1-st locking unit 2310 may be mounted at the motor of the 1-st actuator 2310, and the 2-nd locking unit 2320 may be mounted at the reducer of the 2-nd actuator 2320, but they are not limited thereto.

For example, in case the controller supplies the power to the 1-st actuator 2250 and does not supply the power to the 2-nd actuator 2260, (i) the 1-st locking unit 2310 of the 1-st actuator 2250 becomes the unlocked state, thereby allowing the 1-st locking pin 2311 to be inserted into the 1-st locking body 2312 and allowing the 1-st actuator 2250 to rotate and (ii) the 2-nd locking unit 2320 of the 2-nd actuator 2260 maintains the locked state, thereby disallowing the power of the 1-st actuator 2250 to transmit to the 2-nd actuator 2260. Of course, on the contrary, in case the power is supplied to the 2-nd actuator 2260, (i) the 2-nd locking unit 2320 of the 2-nd actuator 2260 becomes the unlocked state, thereby allowing the 2-nd locking pin 2321 to be inserted into the 2-nd locking body 2322 and allowing the 2-nd actuator 2260 to rotate and (ii) the 1-st locking unit 2310 of the 1-st actuator 2250 maintains the locked state, thereby disallowing the power of the 2-nd actuator 2260 to transmit to the 1-st actuator 2250.

Meanwhile, in the above, it is determined whether the rack loading condition is larger than the predetermined 1-st loading value or smaller than or equal to the predetermined 2-nd loading value by referring to the information on a driving status of the vehicle, but it is not limited thereto. For example, loading conditions for each driving condition can be set according to driving parameters of the vehicle, e.g., speed, target angles of the wheels, etc., and then each actuator, e.g., each operation thereof, each torque thereof, etc., can be controlled according to the set loading conditions.

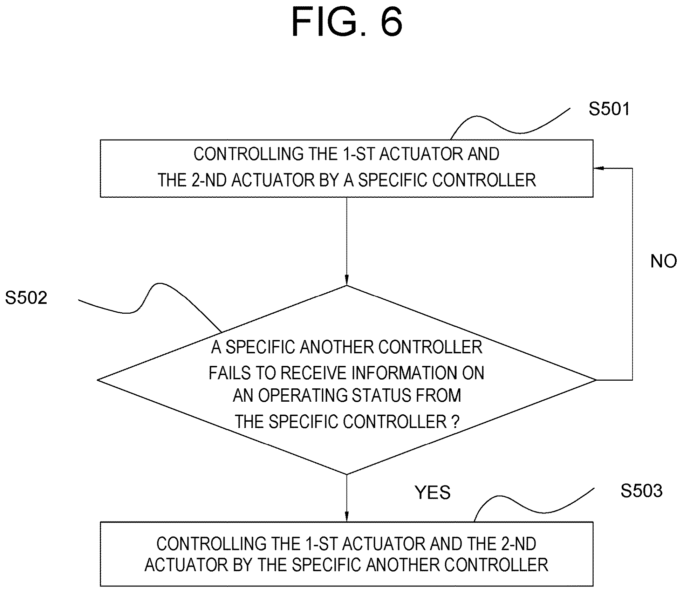

Next, by referring to Fig. 6, the processes of a specific another controller which controls the 1-st actuator 2250 and the 2-nd actuator 2260 in response to detecting that a specific controller is broken in the steer-by-wire device is explained below.

Fig. 6 is a flow chart schematically illustrating processes of the specific another controller which controls the 1-st actuator 2250 and the 2-nd actuator 2260 in response to detecting that a specific controller is broken in the steer-by-wire device in accordance with one example embodiment of the present disclosure.

The steer-by-wire device may include a plurality of controllers. By referring to Fig. 6, the specific controller selected among all the controllers may be configured to control both the 1-st actuator 2250 and the 2-nd actuator 2260 at a step of S501. Further, the specific another controller selected among one or more remaining controllers which is determined by excluding the specific controller from all the controllers may also be configured to control both the 1-st actuator 2250 and the 2-nd actuator 2260.

Herein, each of the specific controller and the specific another controller may be configured to transmit and receive information on its operating status with each other in order to determine whether any one of the specific controller and the specific another controller is broken. In case the specific another controller fails to receive information on the operating status from the specific controller for a certain period of time, the specific another controller may determine that the specific controller is broken at a step of S502. Thereafter, the specific another controller (instead of the specific controller) controls the 1-st actuator 2250 and the 2-nd actuator 2260, thereby allowing the steering angles of the vehicle wheels to be adjusted at a step of S503.

The number of the controllers is not limited. For example, in case a 1-st controller, a 2-nd controller, and a 3-rd controller are used in the steer-by-wire device, the device may be configured to transmit and receive the information on the operating status between the 1-st controller and the 2-nd controller, between the 1-st controller and the 3-rd controller, and between the 2-nd controller and the 3-rd controller.

In the steer-by-wire device, the 1-st actuator 2250 may include a 1-st motor configured to generate power, a 1-st reducer configured to convert the power generated from the 1-st motor into a 1-st power value, and the 1-st sun gear shaft where the 1-st reducer and the 1-st sun gear 2241 are respectively mounted. The 1-st reducer may be configured to adjust the power at a predetermined ratio when the power of the 1-st motor is transmitted to the 1-st sun gear shaft.

Similarly, the 2-nd actuator 2260 may include a 2-nd motor configured to generate power, a 2-nd reducer configured to convert the power generated from the 2-nd motor into a 2-nd power value, and a 2-nd sun gear shaft where the 2-nd reducer and the 2-nd sun gear 2242 are respectively mounted. Likewise, the 2-nd reducer may be configured to adjust the power at the predetermined ratio when the power of the 2-nd motor is transmitted to the 2-nd sun gear shaft.

In accordance with one example embodiment of the present disclosure, the 1-st motor may include a (1_1)-st winding wire to a (1_n)-th winding wire which are configured to generate the power of the 1-st motor. Herein n is an integer greater than or equal to two.

The 2-nd motor may include a (2_1)-st winding wire to a (2_n)-th winding wire which are configured to generate the power of the 2-nd motor. Herein n is an integer greater than or equal to two.

In this case, if it is assumed that (i) the controller includes the 1-st controller to an n-th controller, and (ii) each of (ii-1) a 1-st winding wire pair comprised of the (1_1)-st winding wire and the (2_1)-st winding wire to (ii-2) an n-th winding wire pair comprised of the (1_n)-th winding wire and the (2_n)-th winding wire is connected to and controlled by each of the 1-st controller to the n-th controller. That is, each winding wire of the 1-st motor and its corresponding winding wire of the 2-nd motor can make each pair as above, and one pair of winding wires may be controlled by one controller. Accordingly, one controller may control one winding wire of the 1-st motor and its corresponding one winding wire of the 2-nd motor. This configuration has an advantage of being able to steer the vehicle by controlling some other windings even if a mechanical failure occurs in some windings.

In accordance with another example embodiment of the present disclosure, the 1-st motor may include a 1-st winding wire configured to generate the power of the 1-st motor.

Similarly, the 2-nd motor may include a 2-nd winding wire configured to generate the power of the 2-nd motor, and the controller may include a specific controller and a specific another controller.

In this case, each of the 1-st winding wire and the 2-nd winding wire may be connected to both the specific controller and the specific another controller. That is, the 1-st winding wire and the 2-nd winding wire may be controlled at once by the specific controller, and the 1-st winding wire and the 2-nd winding wire may also be controlled at once by the specific another controller.

Herein, the specific controller and the specific another controller may be configured to transmit and receive the information on the operating status with each other in order to determine whether any one of the specific controller and the specific another controller is broken. In this case, the number of the controllers is not limited. For example, in case the 1-st controller, the 2-nd controller, and the 3-rd controller are used in the steer-by-wire device, the device may be configured to transmit and receive the information on the operating status between the 1-st controller and the 2-nd controller, between the 1-st controller and the 3-rd controller, and between the 2-nd controller and the 3-rd controller.

When the specific controller selected among the all the controllers controls the 1-st winding wire and the 2-nd winding wire, in case the specific another controller fails to receive information on the operating status from the specific controller for a certain period of time, the specific another controller may determine that the specific controller is broken. Thereafter, the specific another controller instructs the 1-st winding wire and the 2-nd winding wire to respectively generate the power of the 1-st motor and the power of the 2-nd motor.

The present disclosure has an effect of providing the steer-by-wire device capable of performing steering control even if a breakdown occurs in an actuator of a wheel steering mechanism of a vehicle.

The present disclosure has another effect of providing the redundancy structure of the steer-by-wire device to be used for coping with an event of a mechanical failure as well as an electrical failure of the actuator.

The present disclosure has still another effect of providing the redundancy structure of the steer-by-wire device configured to allow the planet gear to rotate about the axis of revolution, and thus the planet gear may allow the inoperative sun gear to be rotated.

The present disclosure has still yet another effect of realizing the redundancy structure with a minimal spatial constraint.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the spirit and scope of the disclosure as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A steer-by-wire device of a vehicle comprising:
a rack shaft, where a rack gear is mounted, configured to adjust steering angles of vehicle wheels by a linear motion of the rack gear;
a pinion gear configured to move the rack gear linearly according to a rotational motion of the pinion gear engaged with the rack gear;
a differential gear module including (i) a 1-st sun gear and a 2-nd sun gear installed opposite each other, (ii) at least one planet gear, engaged with the 1-st sun gear and the 2-nd sun gear, wherein the planet gear revolves around an axis of revolution connecting a center point of the 1-st sun gear and a center point of the 2-nd sun gear, in response to a rotational motion of at least one of the 1-st sun gear and the 2-nd sun gear, and (iii) a case configured to rotate about the axis of revolution according to a rotational motion of the planet gear, wherein the case is combined with the pinion gear;
a 1-st actuator and a 2-nd actuator, wherein the 1-st actuator is configured to rotate the 1-st sun gear and the 2-nd actuator is configured to rotate the 2-nd sun gear;
at least one controller configured to control the 1-st actuator and the 2-nd actuator in response to steering input information; and
a steering sensor configured to detect at least one momentum of at least one of the rack gear and the pinion gear.

2. The steer-by-wire device of Claim 1, wherein (i) the controller determines a rack loading condition at a time of a steering of the vehicle by referring to information on a driving status of the vehicle, (ii) in response to determining that the rack loading condition is larger than a predetermined 1-st loading value, the controller controls the 1-st actuator and the 2-nd actuator, thereby allowing the steering angles of the vehicle wheels to be adjusted, and (iii) in response to determining that the rack loading condition is smaller than or equal to a predetermined 2-nd loading value which is lower than the predetermined 1-st loading value, the controller controls a specific actuator selected among the 1-st actuator and the 2-nd actuator, thereby allowing the steering angles of the vehicle wheels to be adjusted.

3. The steer-by-wire device of Claim 2, wherein, on condition that the steering angles of the vehicle wheels have been adjusted by controlling the specific actuator in response to determining that the rack loading condition is smaller than or equal to the predetermined 2-nd loading value, in case the momentum of at least one of the rack gear and the pinion gear, detected from the steering sensor, is less than a target momentum by an allowable threshold or more, wherein the target momentum corresponds to the steering input information, the controller determines that the specific actuator is broken and thus controls a remaining actuator, which is not the specific actuator, selected among the 1-st actuator and the 2-nd actuator, thereby allowing the steering angles of the vehicle wheels to be adjusted.

4. The steer-by-wire device of Claim 1, wherein, in case a cardinal number of the controller is plural, on condition that a specific controller selected among all controllers has controlled the 1-st actuator and the 2-nd actuator, in response to detecting that a specific another controller selected among one or more remaining controllers fails to receive information on an operating status from the specific controller for a certain period of time, wherein the remaining controllers are determined by excluding the specific controller from all the controllers, the specific another controller determines that the specific controller is broken and thus controls the 1-st actuator and the 2-nd actuator, thereby allowing the steering angles of the vehicle wheels to be adjusted.

5. The steer-by-wire device of Claim 1, wherein the 1-st actuator includes a 1-st locking unit configured to allow or disallow a rotation of the 1-st sun gear, and the 2-nd actuator includes a 2-nd locking unit configured to allow or disallow a rotation of the 2-nd sun gear.

6. The steer-by-wire device of Claim 1, wherein the 1-st actuator includes a 1-st motor configured to generate power, a 1-st reducer configured to convert the power generated from the 1-st motor into a 1-st power value, and a 1-st sun gear shaft where the 1-st reducer and the 1-st sun gear are respectively mounted, and
wherein the 2-nd actuator includes a 2-nd motor configured to generate power, a 2-nd reducer configured to convert the power generated from the 2-nd motor into a 2-nd power value, and a 2-nd sun gear shaft where the 2-nd reducer and the 2-nd sun gear are respectively mounted.

7. The steer-by-wire device of Claim 6, wherein the 1-st motor includes a (1_1)-st winding wire to a (1_n)-th winding wire which are configured to generate the power of the 1-st motor, wherein n is an integer greater than or equal to two,
wherein the 2-nd motor includes a (2_1)-st winding wire to a (2_n)-th winding wire which are configured to generate the power of the 2-nd motor,
wherein the controller includes a 1-st controller to an n-th controller, and
wherein, in case a 1-st winding wire pair is comprised of the (1_1)-st winding wire and the (2_1)-st winding wire and in case an n-th winding wire pair is comprised of the (1_n)-th winding wire and the (2_n)-th winding wire, each of the 1-st winding wire pair to the n-th winding wire pair is connected to and controlled by each of the 1-st controller to the n-th controller.

8. The steer-by-wire device of Claim 6, wherein the 1-st motor includes a 1-st winding wire configured to generate the power of the 1-st motor,
wherein the 2-nd motor includes a 2-nd winding wire configured to generate the power of the 2-nd motor,
wherein the controller includes a specific controller and a specific another controller, and
wherein, on condition that each of the 1-st winding wire and the 2-nd winding wire has been connected to the specific controller and the specific another controller, in case the specific controller controls the 1-st winding wire and the 2-nd winding wire, in response to detecting that the specific another controller fails to receive information on an operating status from the specific controller for a certain period of time, the specific another controller capable of controlling the 1-st winding wire and the 2-nd winding wire determines that the specific controller is broken and thus instructs the 1-st winding wire and the 2-nd winding wire to respectively generate the power of the 1-st motor and the power of the 2-nd motor.
